# FASCICULE DE BREVET EUROPEEN

(11) **EP 0 914 792 B1**
(45) Date de publication et mention de la délivrance du brevet: **15.06.2005**
(21) Numéro de dépôt: 98811070.6
(22) Date de dépôt: 26.10.1998
(51) Int. Cl.: A47J 39/02

(54) **Combiné de service de table chauffant et isothermique**
Geschirrset mit Heizung und Wärmeisolation
Table service set with heating and thermal insulation

(30) Priorité: 30.10.1997 CH 252097
(43) Date de publication de la demande: 12.05.1999
(73) Titulaire: Truyts, Edwige, 1006 Lausanne (CH)
(72) Inventeur: Truyts, Edwige, 1006 Lausanne (CH)

(56) Documents cités:
- EP-A- 0 002 563
- CH-A- 584 025
- GB-A- 2 121 766
- US-A- 3 231 718
- US-A- 3 610 884
- US-A- 3 875 370
- US-A- 4 866 572

## Description

Actuellement, il existe le chauffe-plat à accumulation de chaleur, le chauffe-plat à bougies ou électrique, des tables chauffantes, des plats avec bain-marie, des plats isothermique avec résistance chauffante intégrée et autres systèmes..tous peu adaptés à la table du point de vue présentation, maniabilité, ils sont surtout encombrants et inesthétiques.

La présente invention concerne un dispositif pour conserver à température pendant la durée d'un repas des aliments disposés dans un espace du dispositif et cuisinés au préalable, lequel dispositif comporte un support chauffant constitué d'une plaque accumulatrice de chaleur ayant une entrée d'alimentation en courant électrique et agencée pour atteindre une température correspondante aux températures de cuisson des aliments et pour communiquer par conduction cette chaleur ainsi accumulée audit espace, lequel dispositif comporte également un couvercle agencé pour recouvrir ledit espace.

Un dispositif comparable est connu du brevet US-A- 3.610.884. Le dispositif connu comporte un espace isolé dans lequel des aliments cuisinés au préalable sont disposés. La cuve délimitant ledit espace est en contact avec la plaque accumulatrice de chaleur. Cette plaque communique sa chaleur à la cuve et conserve les aliments à une température de service. Tant la cuve que la plaque sont disposés dans une chambre à air afin de les isoler de la température ambiante et réduire ainsi les pertes de chaleur. Même l'entrée d'alimentation électrique est intégrée dans le dispositif pour éviter les pertes de chaleur.

Des dispositifs similaires sont connus des brevets EP 0 002 563 et US 3 875 370 comprenant également une chambre à air et/ou une gaine de résine. Le tout forment des ensembles qui certes sont fonctionnels, mais sont peu présentables sur une table.

L'invention a pour but de réaliser un dispositif pour conserver à température des aliments pendant la durée d'un repas, lequel dispositif est présentable sur une table de façon autonome et sans porter atteinte aux propriétés de conserver les aliments à température.

A cette fin le dispositif suivant l'invention comporte les caractéristiques de la revendication 1. L'utilisation d'un plat de présentation pour délimiter ledit espace permet d'utiliser un objet présentable sur une table. De plus puisque le plat, le couvercle et la plaque forment un combiné autonome de service de table permettant de former une entité chauffante et isothermique à même d'aboutir à une synergie de températures permettant d'assurer l'isotherme des aliments dans ledit plat, les propriétés de conserver à température les aliments restent intactes.

Le combiné se compose d'un support chauffant autonome (1), constitué d'une plaque accumulatrice de chaleur de même forme et même dimension qu'un plat de présentation (2) muni d'un couvercle (3). Le support chauffant et le plat de présentation correspondant constitue un combiné (4) qui se branche sur le secteur électrique (5) par l'intermédiaire d'une prise d'alimentation (6) située dans le support chauffant (1). Durant cette opération, le support chauffant communique sa chaleur par conduction au plat de présentation jusqu'à atteindre une température de consommation des aliments de 65 à 85°. Une fois chaud, le combiné est débranché du secteur et devient autonome et est prêt à recevoir les aliments qui ont été cuisinés de manière traditionnelle et donc au maximum de leur température respective. Disposé sur la table, le combiné conserve ainsi une chaleur de consommation des aliments pendant toute la durée du repas. Il y a autant de combinés utilisés et disposés de la sorte que nécessaire ; Légumes, pâtes ou pommes de terre, viande, sauce ou au contraire, un plat unique,etc...

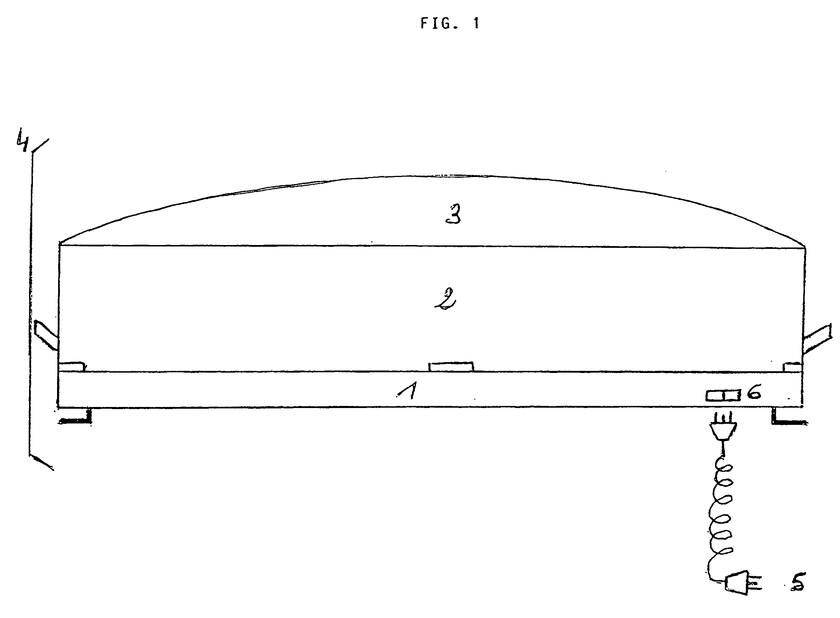

La figure unique du dessin annexé illustre, schématiquement et à titre d'exemple, une forme d'exécution du combiné de service de table chauffant et isothermique selon l'invention et à titre d' exemple.

Le présent combiné de service de table résout le problème de déperdition de chaleur lors de la manipulation de la nourriture et permet, au contraire, une synergie des températures. Il épargne un maximum de perte de chaleur en transvasant un aliment chaud dans un récipient chaud, couvert et maintenu au chaud. En effet, pour obtenir les qualités gustatives intrinsèques à chaque préparation, la cuisine a besoin de l'équipement existant sur le marché tels que, cocottes, poêles, romertoff, four, vapeur, gril,...En revanche, maintenir au chaud sans recuisson constitue une difficulté qui jusqu'ici n'a pas été résolue de façon idéale.

Le combiné de service de table chauffant et isothermique résout le problème d'encombrement des chauffes-plats traditionnels peu adaptés aux plats de présentation existants, peu esthétiques et peu pratiques surtout s'ils sont reliés à une prise de courant lorsqu' ils sont à table.

Le combiné de service de table chauffant et isothermique permet la fabrication de plats de présentation en différents matériaux généralement utilisés à cet usage répondant comme cela à des critères pratiques et/ou esthétiques à travers des formes, des dimensions, des coloris ou des styles différents afin de répondre aux besoins de la cuisine actuelle de qualité.

Le combiné de service de table chauffant et isothermique est donc une entité autonome et décorative tout en répondant à un besoin, celui de manger chaud.

Le combiné de service de table chauffant et isothermique redonne aux plats de présentation une fonctionnalité perdue en réadaptant leurs formes et leurs dimensions.

## Revendications

1. Dispositif pour conserver à température pendant la durée d'un repas des aliments disposés dans un espace du dispositif et cuisinés au préalable, le dispositif comportant un support chauffant (1) constitué d'une plaque accumulatrice de chaleur ayant une entrée d'alimentation (6) en courant électrique et agencée pour atteindre une température correspondante aux températures de consommation des aliments et pour communiquer par conduction cette chaleur ainsi accumulée audit espace, le dispositif comportant également un couvercle (3) agencé pour recouvrir ledit espace, ledit espace étant délimité par un plat (2) de présentation non-relié à ladite entrée d'alimentation, le plat (2) étant de même dimension que ladite plaque, ledit plat (2) et son couvercle (3) formant avec ladite plaque un combiné (4) autonome de service de table permettant de former une entité chauffante et isothermique à même d'aboutir à une synergie de températures permettant d'assurer l'isotherme des aliments dans ledit plat, **caractérisé en ce que** le couvercle recouvre seulement ledit plat et non la plaque.

## Patentansprüche

1. Vorrichtung zur Wahrung der Temperatur von Nahrungsmitteln, die in einem Bereich der Vorrichtung angeordnet und im Vorfeld zubereitet werden, binnen der Dauer einer Mahlzeit, wobei die Vorrichtung einen Heizträger (1) aufweist, der aus einer mit einem Stromversorgungseingang versehenen und so ausgelegten Wärmespeicherplatte (6) ausgebildet und so ausgelegt wird, dass eine der Verzehrtemperatur der Nahrungsmittel entsprechende Temperatur erreicht und diese so in diesem Bereich gespeicherte Wärme durch Wärmeleitung weitergeleitet wird, wobei diese Vorrichtung femer einen zur Abdeckung dieses Bereichs ausgelegten Deckel (3) aufweist und dieser Bereich durch eine Servierschale (2) begrenzt wird, die nicht mit dem besagten Versorgungseingang verbunden ist. Die Schale (2) weist dieselbe Abmessung wie die Platte auf, und Schale (2) und Deckel (3) bilden mit der Platte ein gesondertes Geschirrset (4), das die Ausbildung einer isothermen Heizeinheit ermöglicht, welche geeignet ist, eine Temperatursynergie zur Gewährleistung der Isotherme der Nahrungsmittel in dieser Schüssel zu erreichen, **dadurch gekennzeichnet, dass** der Deckel nur die Schüssel und nicht die Platte abdeckt.

## Claims

1. An appliance that maintains the temperature, throughout the meal, of foods placed in a space in the appliance and cooked beforehand, the appliance consisting of a heating stand (1) made up of a heat accumulating plate with an electric current input (6) and designed to reach a temperature equivalent to food consumption temperatures and to communicate the heat thus accumulated in the said space by conduction, the appliance also including a lid (3), designed to cover the said space, the said space being delimited by a presentation dish (2) not linked to the said electric current input. As the dish (2) is the same size as the said plate, the said dish (2) and its lid (3) forming an independent table service set (4) used to form a heating, isothermal entity capable of creating temperature synergies to ensure that the foods in the said dish remain at a constant temperature, **characterised by** the fact that the lid covers only the said dish and not the plate.
